# EUROPEAN PATENT SPECIFICATION

(11) **EP 2 740 260 B1**
(45) Date of publication and mention of the grant of the patent: **29.12.2021**
(21) Application number: 12753407.1
(22) Date of filing: 02.08.2012
(51) Int. Cl.: H04N 5/225

(54) **DEVICE WITH A HOUSING, AT LEAST TWO PRINTED CIRCUIT BOARDS, AND AT LEAST ONE HEAT DISSIPATING ELEMENT**
VORRICHTUNG MIT EINEM GEHÄUSE, MINDESTENS ZWEI LEITERPLATTEN UND MINDESTENS EINEM WÄRMEABLEITELEMENT
DISPOSITIF COMPORTANT UN BOÎTIER, AU MOINS DEUX CARTES DE CIRCUIT IMPRIMÉ, ET AU MOINS UN ÉLÉMENT DE DISSIPATION DE CHALEUR

(30) Priority: 05.08.2011 DE 102011109594
(43) Date of publication of application: 11.06.2014
(73) Proprietor: Connaught Electronics Ltd., Tuam, County Galway (IE)
(72) Inventor: HEHIR, Colin Patrick, Roscam, County Galway (IE); FADDEN, David John, Castlebar, County Mayo (IE)
(74) Representative: Jauregui Urbahn, Kristian
(86) International application number: PCT/EP2012/065179
(87) International publication number: WO 2013/020897

(56) References cited:
- EP-A2- 0 541 449
- WO-A1-2009/046513
- WO-A2-98/05058
- JP-A- 2001 275 022
- JP-A- 2010 074 665
- KR-A- 20110 089 103
- US-A1- 2005 099 521

## Description

The invention relates to a device for a motor vehicle, configured to process image data of an image capturing unit, with a housing.The invention also relates to a camera for a driver assistance device with such a device.

It is usually necessary to construct systems for driver assistance devices particularly compact and space-saving, since such cameras are often installed inside the wing mirrors of a motor vehicle or between windscreen and rear view mirror. This requires a plurality of diverse electronic and optical components to be assembled inside the camera such that adequate cooling is still ensured. As a rule, cameras comprise a plurality of optical lenses as well as a semiconductor sensor, for example a CCD (charge coupled device) sensor positioned on a printed circuit board. Besides, a plurality of additional electronic components on printed circuit boards are required for image processing. All of these electronic components produce waste heat, the dissipation of which, given a compact design, is challenging. However, in order to ensure operational reliability and a long life span of the camera, overheating of the electronic components is to be prevented by means of directed and effective heat dissipation.

From DE 10 2008 001 675 A1 a camera module for capturing image data, in particular for use in motor vehicles, is known, which comprises at least one image sensor chip.The camera module further comprises at least one Peltier element with at least one cooling surface, wherein the image sensor chip is connected with the cooling surface by at least one heat collecting element. However, cooling by means of Peltier elements is expensive and even the Peltier element itself generates waste heat, which necessitates adequate dissipation. Besides, Peltier elements are bulky and large so as not to allow for compact camera devices.

From US 2010/0118145 A1 a camera housing is known, which comprises a printed circuit board with a CCD chip for image capturing as well as a printed circuit board with electronic components for image processing. These two printed circuit boards are spaced apart, wherein the printed circuit board for image processing is arranged diagonally inclined towards the printed circuit board with the image sensor chip so as to efficient heat dissipation by means of the effect of the floating upwards of hot air.

JP 2010 074665 A discloses miniaturization of an imaging apparatus by reducing the occupied volume of a device board in a housing, while improving the heat radiation properties of the electronic components fixed to the device board. JP 2010 074665 discloses the features of the preamble of claim 1.

JP2001275022 A provides a video camera which is small-sized, high in density, and low-cost and has high vibration resistance by using no board-to-board connector, using an integrated multi-layered flexible board, and decreasing the number of components. In particular JP2001275022 A discloses pillar-like protrusions in the interior wall of the housing for positioning the printed circuit boards.

However, the geometry described does not allow for an especially space-saving arrangement of all the components in the camera, nor, consequently, for the realization of a compact camera system.

A tight and compact arrangement of all the individual components required for image processing and image capturing in a single shared camera housing is particularly challenging due to the problem of efficient heat dissipation. The electronic components for image processing in particular produce a lot of waste heat, which can negatively influence the image capturing qualities (e.g. by thermal noise) of the image capturing chip.

It is the object of the invention to provide a camera as well as a device for processing image data, which have a compact design but still ensure more efficient heat dissipation.

This object is achieved by a device having the features of claim 1, as well as by a camera having the features of claim 14.

By means of the parallel arrangement of the at least two printed circuit boards for image processing a particularly compact design of the device is achievable. The spaced-apart arrangement ensures adequate convection and thus heat dissipation. Heat dissipation is additionally ensured by the heat dissipating element, which is also arranged in the device. Thus, not only a highly compact device for processing image data is provided, but provision is also made for this device to work reliably and consistently, since waste heat is dissipated very efficiently. Thermal noise at an image capturing unit is reliably prevented. Besides, provision is made that there is hardly a change of optical paths due to thermally induced movements of optical elements.

The housing extends along a principal axis, which in particular coincides with an optical axis of the image capturing unit, wherein the at least two printed circuit boards are arranged vertically to the principal axis. Thus, a simple, yet very compact geometry is provided for the arrangement of the printed circuit boards in the housing. A thermal coupling of the printed circuit boards to the housing is easy to implement, while heat convection and thus heat dissipation are still ensured over and above moderate space requirements. In the direction of the optical axis in particular a housing with little geometrical extension is provided, which is particularly advantageous if the device is to be installed in a wing mirror of a motor vehicle or between windscreen and rear view mirror. Likewise, the assembly of the individual components as well as a possible replacement of defective components are easy to perform.

Preferably, within the housing at least two supporting areas are arranged vertically to the principal axis, on which one of the at least two printed circuit boards is placeable in different positions in a direction vertical to the principal axis, and the at least one heat dissipating element is formed by the at least two supporting areas. The supporting areas ensure highly efficient heat dissipation, yet allow for a positioning of the printed circuit board vertically to the principal axis with a certain degree of geometrical tolerance. Thus, not only heat dissipation is provided for, but also a simplified assembly of the device. A correct alignment of the printed circuit board in the direction of the principal axis is rendered possible and the distance between the printed circuit board and an interior wall of the housing can be adjusted accurately. Particularly preferably, the printed circuit boards are basically each supported by the housing and do not support each other.

The at least two supporting areas are formed by the end faces of pillar-like protrusions on an interior wall of the housing. Preferably, the pillar-like protrusions extend parallel to the principal axis. In particular, the pillar-like protrusions can be formed as particularly narrow vertical supporting elements, which are formed integrally with the housing and protrude from an interior wall of the housing after the manner of supports.

Housing and pillar-like protrusions can be formed from the same or different materials. Particularly preferably, for each printed circuit board at least three supporting areas are provided. This not only enables a particularly stable mechanical support of the printed circuit boards but also a highly efficient heat transfer to the housing via thermal conduction.

It can be provided that pad-like elements are formed on the supporting areas, by means of which a particularly effective thermal contact is established between the printed circuit boards and the housing. In particular, the printed circuit boards can be joined to the supporting areas by material engagement via a glued connection. The at least two supporting areas can be formed from a material which has at least the same thermal conductivity as the printed circuit board accomodated by them and/or as the housing.

Preferably, the at least one heat dissipating element is formed by a plurality of cooling fins disposed on the outside of the housing. Thus, heat transmitted from the printed circuit boards to the housing can be transferred from the housing via the cooling fins to the ambient air very efficiently due to the large surface thus created. In particular, the cooling fins are formed integrally with the housing, wherein a particularly efficient heat conduction is ensured if the housing is made from metal. In particular with a small, very compact housing highly efficient cooling is yet ensured by means of the cooling fins, while this compactness is maintained. In particular, the fins can be formed such that they extend parallel to the principal axis. Thus, the physical principles of thermal conduction and heat convection are utilized.

Preferably, a hollow space is formed between the at least two printed circuit boards and the hollow space is filled at least in part with a thermally conductive material as heat dissipating element. The thermally conductive material is in direct mechanical contact with the at least two printed circuit boards each. In particular, it can be provided that the heat dissipating element has at least the same thermal conductivity as the at least two printed circuit boards and/or the housing. Thus, it is guaranteed that differences in temperature between the printed circuit boards are evened out. A printed circuit board which is positioned near an image capturing sensor and which is very hot can thus transfer its thermal energy quickly and efficiently to a cooler printed circuit board which is farther from the image capturing sensor. Thermal overloading of sensitive optical components is thus reliably prevented.

Particularly preferably, the thermally conductive material is in direct mechanical contact with an interior wall of the housing. Thus, by means of the thermally conductive material heat can be transferred via thermal conduction not only between the printed circuit boards but also between the printed circuit boards and the housing. Thus, thermal energy transferred to the housing can, for example, be quickly and reliably be dissipated on the outside of the housing. It is guaranteed that thermal energy is quickly transferred from the inside of the housing to the exterior space of the housing in order to be released.

Preferably, the thermally conductive material comprises an adhesive and/or sealing agent. Specifically, the thermally conductive material can be so-called putty. That way, not only highly efficient heat dissipation is ensured, but additionally the individual components, for example the printed circuit boards, are especially easy to install when the device is assembled. The process of assembly is uncomplicated and cost-saving. By means of the adhesive and/or sealing agent it is specifically effected that the individual printed circuit boards are held safely in position in the direction of the principal axis. Undesirable movements of the printed circuit boards are prevented and a continual thermal contact with the housing is ensured. The heat capacity of the housing is increased by means of the adhesive and/or sealing agent.

Alternatively or additionally, it can preferably be provided that the thermally conductive material is formed by a pad which in particular extends continuously between at least two vertically opposed marginal areas of one of the at least two printed circuit boards. By means of the thermally conductive pad heat can be conducted away from the printed circuit boards and transferred to the housing. Likewise, the fitting and handling of the pad is easy to carry out. The pad likewise allows for the printed circuit boards to be arrested in the direction of the principal axis.

Preferably, the device comprises a metal clip as heat dissipating element, which basically extends parallel to one of the at least two printed circuit boards and embraces said printed circuit board on opposing sides of said printed circuit board such that said printed circuit board is arrested in a position relative to the housing, wherein the metal clip is particularly in direct mechanical contact with one of the printed circuit boards and/or the housing. By means of the metal clip uninterrupted effective thermal contact between the printed circuit board and the housing is ensured, since via the metal clip these two components are held at least force-locked in effective contact, whereby thermal conduction is ensured. By designing the arresting element as a clip, it is moreover ensured that no undesired heat build-up is generated above the printed circuit board, but that heat dissipation and heat convection continue to be guaranteed. The metal clip transfers heat from the printed circuit board to the housing. The force of the arrest can be variably adjusted by means of the spring constant of the metal clip.

Preferably one of the at least two printed circuit boards comprises a surface-mounted component, in particular with a spring-loaded element. In particular, the housing in that case comprises a housing cover plate. It is then preferably provided that, with the housing cover plate attached to the housing, effective contact is established between the surface-mounted component and the housing cover plate such that one of the at least two printed circuit boards is held force-locked in a required position. By means of the force closure, thermal conduction is ensured between one of the at least two printed circuit boards and the housing. Thus, only known components are made use of, which interact in a new way such that heat dissipation is provided for in an especially advantageous manner. The surface-mounted component can specifically be an element of the so-called surface-mount-technology (SMT).

This embodiment is particularly advantageous if combined with the at least two supporting areas arranged vertically to the principal axis. Thus, the printed circuit board can be pressed against the supporting areas by the housing cover plate via the surface-mounted component such that heat can be conducted very efficiently from the printed circuit board to the supporting areas. Thus, there is no need for additional fastening of the printed circuit board in the housing, for example by means of clips, screws, etc; the contact pressure alone suffices. The assembly of the device is thus particularly easy to accomplish and cost-saving. Preferably the functions of electrically contacting the printed circuit board and of mechanically arresting said printed circuit board are fulfilled by one and the same surface-mounted component.

Preferably, between another of the at least two printed circuit boards and the printed circuit board which comprises the surface-mounted component effective contact is established such that the other printed circuit board is also held force-locked in a required position assigned to the other printed circuit board.

Preferably, the image capturing unit is placed at least with subcomponents on at least one of the printed circuit boards. Thus, also waste heat produced by the image capturing unit is transferred very efficiently to the housing in the manner described.

A camera according to the invention is realized for a driver assistance device and comprises a device according to the invention. The camera thus realized for the driver assistance device is particularly compact and takes into account the cramped space in a motor vehicle.

By referring to embodiments, the invention is explained in more detail below. The attached drawings show in:
- Fig. 1: a sectional view of a device for processing image data with three printed circuit boards arranged in parallel;
- Fig. 2: a plan view of a device according to Fig. 1, wherein only the lowermost printed circuit board has been installed;
- Fig. 3: a plan view according to Fig. 2, wherein a further printed circuit board has been installed;
- Fig. 4: a plan view according to Figs. 2 and 3, wherein three printed circuit boards have been installed on top of each other;
- Fig. 5: a side view of a housing of a device for processing image data with cooling fins arranged in the direction of a principal axis;
- Fig. 6: the housing of Fig. 5 in a perspective side view;
- Fig. 7: a plan view of the housing of Fig. 5 in the direction R;
- Fig. 8: a sectional view of a device for processing image data with putty between the printed circuit boards;
- Fig. 9: a perspective sectional view of the device of Fig. 8;
- Fig. 10: a device shown in a representation equivalent to Fig. 3, with a thermally concuctive pad arranged above a printed circuit board;
- Fig. 11: a perspective side view of three printed circuit boards with a thermally conductive pad between two of said printed circuit boards;
- Fig. 12: a perspective sectional view of a device with the arrangement of printed circuit boards of Fig. 11 in a housing;
- Fig. 13: a sectional view of a device for processing image data with a printed circuit board arrested via a metal clip;
- Fig. 14: a plan view of the device of Fig. 13;

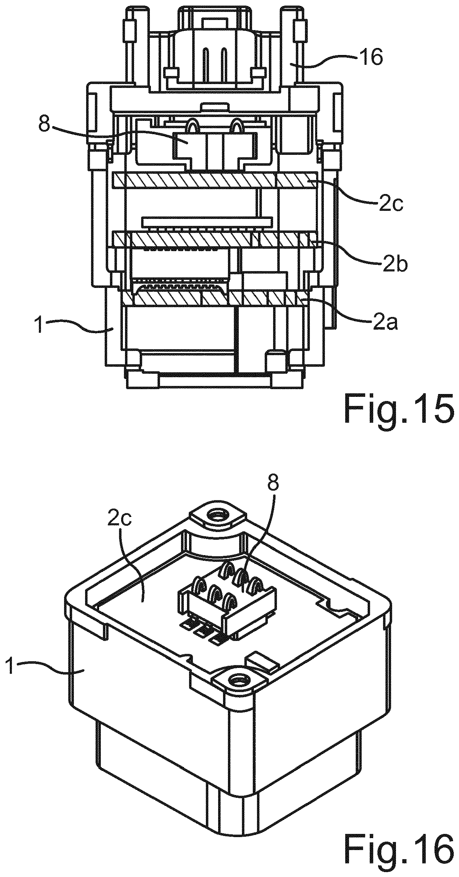

- Fig. 15: a schematic sectional view of a device for processing image data with a printed circuit board which is vertically arrested via a surface-mounted component and a housing cover plate; and
- Fig. 16: a perspective view of the device of Fig. 15, wherein the housing cover plate has been removed.

In the figures the same elements or elements of the same function are provided with the same reference signs.

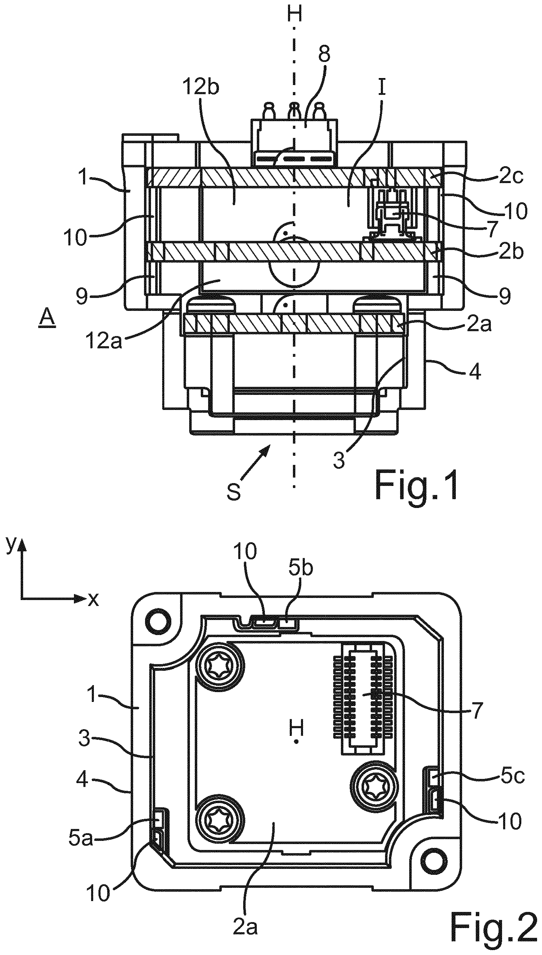

Figs. 1 to 4 show a device for a motor vehicle which is configured to process image data of an image capturing device. The device comprises a camera housing 1, in which three printed circuit boards 2a, 2b, and 2c are arranged in parallel and spaced apart and - in relation to a principal axis H - vertically to said principal axis H. Between the lowermost printed circuit board 2a and the middle printed circuit board 2b a hollow space 12a is formed, whereas between the middle printed circuit board 2b and the topmost printed circuit board a hollow space 12b is formed. On the printed circuit boards 2a to 2c electronic components 7 are arranged inside the housing. Said electronic components produce waste heat when operated with electricity. A further electronic component is the surface-mounted component referred to as SMT 8.

Not shown are the image capturing unit formed as a CCD chip as well as optical components, for example lenses which focus light specifically on the CCD chip. These components are arranged inside or on the outside of the camera housing 1 on its side S. They are arranged such that their optical axis coincides with the principal axis H.

Thus, as is to be gathered from Fig. 1, a particularly compact camera is provided for, which is characterized by moderate geometrical dimensions especially in the direction of the principal axis H. This is achieved in particular by the parallel arrangement of the printed circuit boards 2a to 2c. However, this also results in the need for waste heat produced by these printed circuit boards, on which electronic components for image processing are arranged, to be dissipated with particular efficiency.

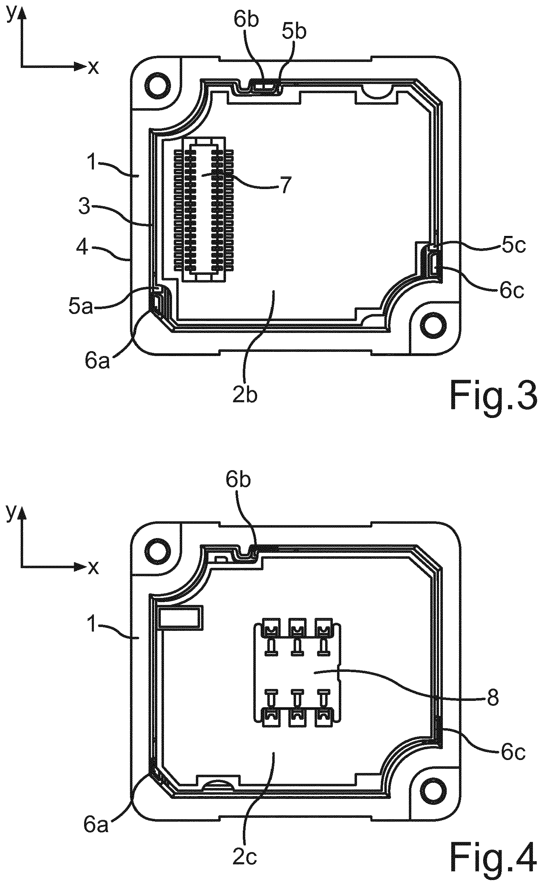

For this purpose, pillar-like protrusions 9 and 10 are formed on the interior wall 3 of the camera housing 1. The protrusions 9 serve to support the printed circuit board 2b. This is to be gathered from Fig. 2 in particular. On the end faces of the protrusions 9 supporting areas 5a to 5c are formed, which serve to support the middle printed circuit board 2b. The situation with the middle printed circuit board 2b installed is illustrated in Fig. 3. As shown in Fig. 3, the printed circuit board 2b is arrested by means of the protrusions 9 in the direction of the principal axis H, whereas - in some degree - it is easily movable in the x- and y-directions via the supporting areas 5a to 5c. The supporting areas 5a to 5c ensure highly effective thermal contact between the printed circuit board 2b and the camera housing 1, which is made from aluminium.

Supporting areas 6a to 6c are formed on the end faces of pillar-like protrusions 10 parallel to the supporting areas 5a to 5c, but offset in the direction of the principal axis H. These serve to support the topmost printed circuit board 2c, which is shown in an assembled state in Fig. 4. By means of the supporting areas 6a to 6c likewise, a highly effective thermal contact is established between the printed circuit board 2c and the camera housing 1.

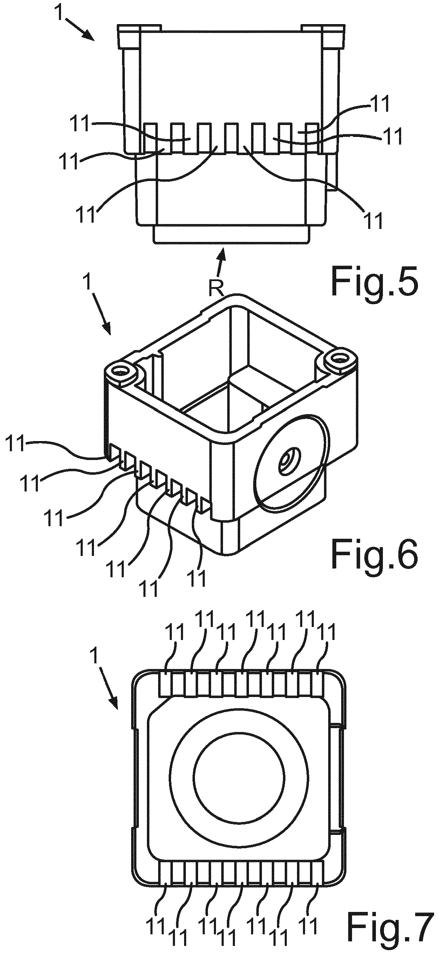

The heat transferred from the printed circuit boards 2a to 2c to the camera housing 1 via thermal conduction can then be released from the housing into the ambient air in the exterior space A of the housing via cooling fins 11. The arrangement of said cooling fins 11 is shown in Figs. 5 to 7. Therein, a plurality of cooling fins 11 arranged in parallel extend parallel to the principal axis H.

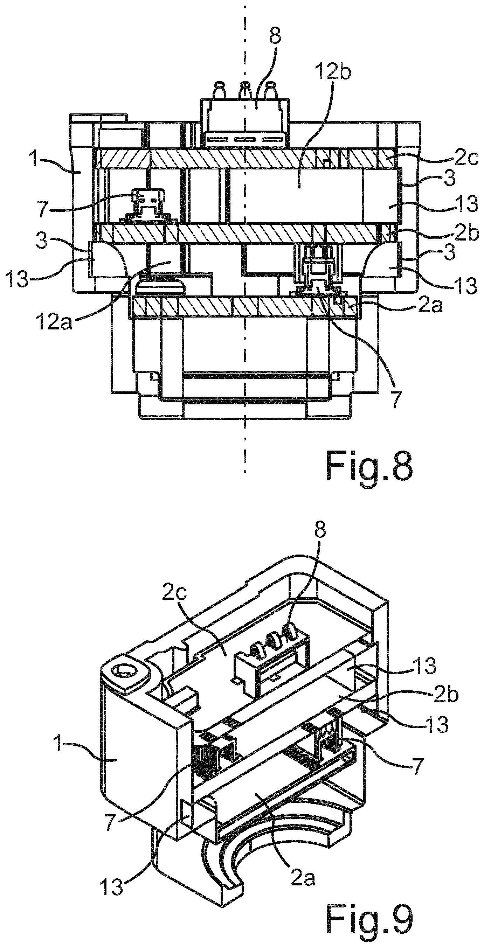

In order to achieve improved fixation and heat dissipation as regards the printed circuit boards 2a to 2c in comparison with the arrangement according to Figs. 1 to 4, according to the embodiment of Figs. 8 and 9 it is provided that putty 13 be used when the device is assembled. By means of said putty 13, the printed circuit boards 2a and 2b as well as 2b and 2c are joined via force closure and material engagement and arrested in the direction of the principal axis H. Besides, the putty 13 is connected with the camera housing 1 at least via material engagement. Said putty 13 increases the heat capacity of the camera housing 1 and ensures that differences in temperature between the printed circuit boards 2a to 2c are compensated by means of the effect of heat conduction. Thus, additionally, waste heat can be transmitted not only via the supporting areas 5a to 5c and 6a to 6c to the camera housing 1, but also via the contact areas formed by the putty 13.

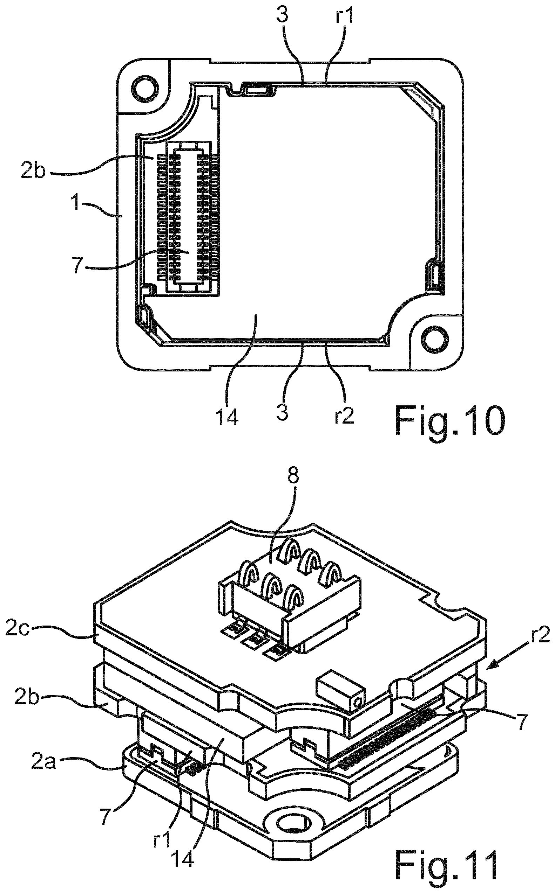

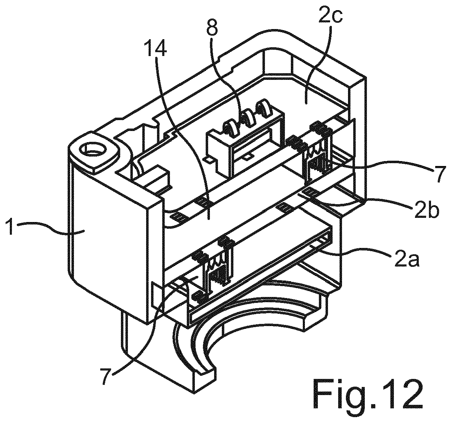

Alternatively, instead of using the putty 13, a thermally conductive pad 14 can be provided for, according to the embodiments of Figs. 10 to 12. As is to be seen from Figs. 10 to 12, the thermally conductive pad 14 is disposed between the middle printed circuit board 2a and the topmost printed circuit board 2c and, at least in the direction of the principal axis H, completely fills the the hollow space vertically. Thus, a form-fit connection and effective mechanical contact is established between the printed circuit boards 2b and 2c. Thus, thermal conduction is ensured between said two printed circuit boards. Moreover, the thermally conductive pad 14 extends continuously between two vertically opposed marginal areas r1 and r2 of the printed circuit board 2b. Direct mechanical contact with the interior wall 3 of the camera housing 1 is thus ensured.

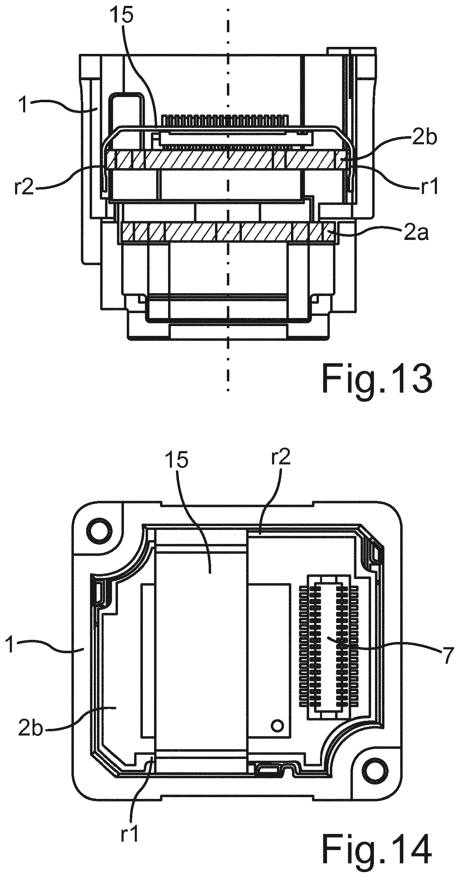

The embodiment of Figs. 13 and 14 shows the printed circuit board 2b, which is arrested by a metal clip 15 both in the direction of the principal axis H and horizontally to said principal axis H. The metal clip 15 has a certain spring constant and is assembled in a pre-stressed state in order to build the device according to Figs. 13 and 14. Thus, the printed circuit board 2b is specifically arrested in the x- and y-directions as well. Besides, at the marginal areas r1 and r2 the metal clip 15 ensures adequate thermal contact between the printed circuit board 2b and the interior wall 3 of the housing. Since the metal clip 15 embraces the printed circuit board 2b on its upper side, gas exchange and thus heat convection are still ensured.

Fig. 5 shows the camera device which is now covered by a housing cover plate 16. In the direction of the principal axis H, the housing cover plate 16 presses onto the SMT 8, which is arranged on the printed circuit board 2c. Thus, electronic contact is established between the printed circuit board 2c and electronic components in the housing cover plate 16. Besides, on its supporting areas 6a to 6c the printed circuit board 2c is likewise pressed on in the direction of the principal axis H and thus arrested. By means of this, a particularly effective thermal contact is ensured between the printed circuit board 2c and the camera housing 1.

## Claims

1. Device for a motor vehicle, configured to process image data of an image capturing unit, with a housing (1), wherein in the housing (1) at least two printed circuit boards (2a, 2b, 2c) with electronic components (7, 8) for processing the image data are placed in parallel and spaced apart on corresponding sets of supporting areas (5a, 5b, 5c; 6a, 6b, 6c) and the housing (1) extends along a principal axis (H), which in particular coincides with an optical axis of the image capturing unit, and the at least two printed circuit boards (2a, 2b, 2c) are arranged along the principal axis (H), and at least one heat dissipating element (5a, 5b, 5c; 6a, 6b, 6c, 11, 13, 14, 15) is positioned inside (I, 3) or on the outside (A, 4) of the housing (1), which is configured to dissipate heat generated by the electronic components in operation, while within (I) the housing (1) at least two sets of supporting areas (5a, 5b, 5c; 6a, 6b, 6c) are arranged along the principal axis (H), on which the at least two printed circuit boards (2b; 2c) are placeable in different positions in the direction of the principal axis (H), the at least one heat dissipating element being formed by the at least two sets of supporting areas (5a, 5b, 5c; 6a, 6b, 6c)
**characterized in that**
one of the at least two sets of supporting areas (6a, 6b, 6c) is formed by having the end faces of a set of pillar-like protrusions (10) on an interior wall (3) of the housing (1) parallel to the end faces of another set of pillar-like protrusions (9) forming another set of the at least two supporting areas (5a, 5b, 5c) formed on the interior wall (3), but offset in said direction of said principal axis H.

2. Device according to claim 1,
**characterized in that**
the at least one heat dissipating element is formed by a plurality of cooling fins (11) disposed on the outside (4) of the housing (1).

3. Device according to any one of the preceding claims,
**characterized in that**
a hollow space (12a; 12b) is formed between the at least two printed circuit boards (2a, 2b; 2b, 2c), and the hollow space (12a; 12b) is filled at least in part with a thermally conductive material (13, 14) as heat dissipating element, which in particular has at least the same thermal conductivity as the at least two printed circuit boards (2a, 2b, 2c) and/or the housing (1), wherein the thermally conductive material (13, 14) is in direct mechanical contact with the at least two printed circuit boards (2a, 2b, 2c) each.

4. Device according to claim 3,
**characterized in that**
the thermally conductive material (13, 14) is in direct mechanical contact with an interior wall (3) of the housing (1).

5. Device according to claim 4,
**characterized in that**
the thermally conductive material comprises an adhesive and/or sealing agent (13).

6. Device according to claim 3 or 4,
**characterized in that**
the thermally conductive material is formed by a pad (14), which in particular extends continuously between at least two vertically opposed marginal areas (r1, r2) of one of the at least two printed circuit boards (2b).

7. Device according to any one of the preceding claims,
**characterized by**
a metal clip (15) as heat dissipating element, which basically extends parallel to one (2b) of the at least two printed circuit boards (2a, 2b, 2c) and embraces said printed circuit board (2b) on opposing sides (r1, r2) of said printed circuit board (2b) such that said printed circuit board (2b) is arrested in a position relative to the housing (1), wherein the metal clip (15) is particularly in direct mechanical contact with one (2b) of the printed circuit boards (2a, 2b, 2c) and/or the housing (1).

8. Device according to any one of the preceding claims,
**characterized in that**
one (2c) of the at least two printed circuit boards (2a, 2b, 2c) comprises a surface-mounted component (8), in particular with a spring-loaded element, and the housing (1) comprises a housing cover plate (16), and, with the housing cover plate (16) attached to the housing (1), effective contact is established between the surface-mounted component (8) and the housing cover plate (16) such that one (2c) of the at least two printed circuit boards (2a, 2b, 2c) is held force-locked in a required position.

9. Device according to claim 8
**characterized in that**
between another (2a, 2b) of the at least two printed circuit boards (2a, 2b, 2c) and the printed circuit board (2c) which comprises the surface-mounted component (8) effective contact is established such that the other printed circuit board (2a, 2b) is also held force-locked in a required position assigned to the other printed circuit board (2a, 2b).

10. Device according to any one of the preceding claims,
**characterized in that**
the imaging capturing unit is placed at least with subcomponents on at least one of the printed circuit boards (2a, 2b, 2c).

11. Camera for a driver assistance device with a device according to any one of the preceding claims.

## Patentansprüche

1. Vorrichtung für ein Kraftfahrzeug, das eingerichtet ist, um Bilddaten einer Bildaufnahmeeinheit zu verarbeiten, mit einem Gehäuse (1), wobei in dem Gehäuse (1) mindestens zwei Leiterplatten (2a, 2b, 2c) mit elektronischen Komponenten (7, 8) zum Verarbeiten der Bilddaten parallel und voneinander beabstandet auf entsprechenden Sätzen von Stützbereichen (5a, 5b, 5c; 6a, 6b, 6c) angeordnet sind und das Gehäuse (1) sich entlang einer Hauptachse (H) erstreckt, die insbesondere mit einer optischen Achse der Bildaufnahmeeinheit zusammenfällt, und die mindestens zwei Leiterplatten (2a, 2b, 2c) entlang der Hauptachse (H) angeordnet sind, und mindestens ein Wärmeableitelement (5a, 5b, 5c; 6a, 6b, 6c, 11, 13, 14, 15) innerhalb (I, 3) oder außerhalb (A, 4) des Gehäuses (1) positioniert ist, das eingerichtet ist, um Wärme abzuleiten, die durch die elektronischen Komponenten beim Betrieb erzeugt wird, während innerhalb (I) des Gehäuses (1) mindestens zwei Sätze von Stützbereichen (5a, 5b, 5c; 6a, 6b, 6c) entlang der Hauptachse (H) angeordnet sind, auf der die mindestens zwei Leiterplatten (2b; 2c) in verschiedenen Positionen in der Richtung der Hauptachse (H) positionierbar sind, wobei das mindestens eine Wärmeableitelement durch die mindestens zwei Sätze von Stützbereichen (5a, 5b, 5c; 6a, 6b, 6c) ausgebildet ist,
**dadurch gekennzeichnet, dass**
einer der mindestens zwei Sätze von Stützbereichen (6a, 6b, 6c) dadurch ausgebildet ist, dass er die Endflächen eines Satzes von Säulen-ähnlichen Vorsprüngen (10) auf einer Innenwand (3) des Gehäuses (1) parallel zu den Endflächen eines anderen Satzes von Säulen-ähnlichen Vorsprüngen (9) aufweist, die einen anderen Satz der mindestens zwei Stützbereiche (5a, 5b, 5c) ausbilden, die auf der Innenwand (3) ausgebildet sind, jedoch in der Richtung der Hauptachse H versetzt sind.

2. Vorrichtung nach Anspruch 1,
**dadurch gekennzeichnet, dass**
das mindestens eine Wärmeableitelement durch eine Vielzahl von Kühlrippen (11) ausgebildet ist, die außerhalb (4) des Gehäuses (1) angeordnet sind.

3. Vorrichtung nach einem der vorhergehenden Ansprüche, **dadurch gekennzeichnet, dass**
ein Hohlraum (12a; 12b) zwischen den mindestens zwei Leiterplatten (2a, 2b; 2b, 2c) ausgebildet ist und der Hohlraum (12a; 12b) mindestens teilweise mit einem wärmeleitenden Material (13, 14) als Wärmeableitelement gefüllt ist, das insbesondere mindestens die gleiche Wärmeleitfähigkeit aufweist wie die mindestens zwei Leiterplatten (2a, 2b, 2c) und/oder wie das Gehäuse (1), wobei das wärmeleitende Material (13, 14) in unmittelbarem mechanischem Kontakt mit jeder der mindestens zwei Leiterplatten (2a, 2b, 2c) steht.

4. Vorrichtung nach Anspruch 3,
**dadurch gekennzeichnet, dass**
das wärmeleitende Material (13, 14) in unmittelbarem mechanischem Kontakt mit einer Innenwand (3) des Gehäuses (1) steht.

5. Vorrichtung nach Anspruch 4,
**dadurch gekennzeichnet, dass**
das wärmeleitende Material einen Klebstoff und/oder ein Dichtungsmittel (13) umfasst.

6. Vorrichtung nach Anspruch 3 oder 4,
**dadurch gekennzeichnet, dass**
das wärmeleitende Material durch eine Kontaktfläche (14) ausgebildet ist, die sich insbesondere kontinuierlich zwischen mindestens zwei vertikal gegenüberliegenden Randbereichen (r1, r2) von einer der mindestens zwei Leiterplatten (2b) erstreckt.

7. Vorrichtung nach einem der vorhergehenden Ansprüche, **gekennzeichnet durch**
einen Metallclip (15) als Wärmeableitelement, das sich im Grunde parallel zu einer (2b) der mindestens zwei Leiterplatten (2a, 2b, 2c) erstreckt und die Leiterplatte (2b) auf gegenüberliegenden Seiten (r1, r2) der Leiterplatte (2b) derartig umschließt, dass die Leiterplatte (2b) in einer Position in Bezug auf das Gehäuse (1) festgehalten wird, wobei der Metallclip (15) insbesondere in unmittelbarem mechanischem Kontakt mit einer (2b) der Leiterplatten (2a, 2b, 2c) und/oder dem Gehäuse (1) steht.

8. Vorrichtung nach einem der vorhergehenden Ansprüche, **dadurch gekennzeichnet, dass**
eine (2c) der mindestens zwei Leiterplatten (2a, 2b, 2c) eine oberflächenbefestigte Komponente (8), insbesondere mit einem federbelasteten Element, umfasst und das Gehäuse (1) eine Gehäusedeckplatte (16) umfasst und mit der an dem Gehäuse (1) befestigten Gehäusedeckplatte (16) ein wirksamer Kontakt zwischen der oberflächenbefestigten Komponente (8) und der Gehäusedeckplatte (16) derartig hergestellt wird, dass eine (2c) der mindestens zwei Leiterplatten (2a, 2b, 2c) kraftverriegelt in einer erforderlichen Position gehalten wird.

9. Vorrichtung nach Anspruch 8,
**dadurch gekennzeichnet, dass**
zwischen einer anderen (2a, 2b) der mindestens zwei Leiterplatten (2a, 2b, 2c) und der Leiterplatte (2c), welche die oberflächenbefestigte Komponente (8) umfasst, ein wirksamer Kontakt derartig hergestellt wird, dass die andere Leiterplatte (2a, 2b) auch kraftverriegelt in einer erforderlichen Position gehalten wird, die der anderen Leiterplatte (2a, 2b) zugeordnet ist.

10. Vorrichtung nach einem der vorhergehenden Ansprüche, **dadurch gekennzeichnet, dass**
die Bildaufnahmeeinheit mindestens mit Subkomponenten auf mindestens einer der gedruckten Leiterplatten (2a, 2b, 2c) angeordnet ist.

11. Kamera für eine Fahrerassistenzvorrichtung mit einer Vorrichtung nach einem der vorhergehenden Ansprüche.

## Revendications

1. Dispositif destiné à un véhicule à moteur, configuré pour traiter des données d'image d'une unité de capture d'images, doté d'un boîtier (1), au moins deux cartes (2a, 2b, 2c) à circuits imprimés dotées de composants électroniques (7, 8) servant à traiter les données d'image étant placées en parallèle dans le boîtier (1) et espacées sur des ensembles correspondants de zones (5a, 5b, 5c ; 6a, 6b, 6c) d'appui et le boîtier (1) s'étendant suivant un axe principal (H), qui coïncide en particulier avec un axe optique de l'unité de capture d'images, et lesdites au moins deux cartes (2a, 2b, 2c) à circuits imprimés étant disposées suivant l'axe principal (H), et au moins un élément (5a, 5b, 5c ; 6a, 6b, 6c, 11, 13, 14, 15) de dissipation de chaleur étant positionné à l'intérieur (I, 3) ou à l'extérieur (A, 4) du boîtier (1), qui est configuré pour dissiper de la chaleur générée par les composants électroniques en fonctionnement, tandis qu'à l'intérieur (I) du boîtier (1), au moins deux ensembles de zones (5a, 5b, 5c ; 6a, 6b, 6c) d'appui sont disposés suivant l'axe principal (H), sur lesquels lesdites au moins deux cartes (2b ; 2c) à circuits imprimés peuvent être placées dans différentes positions dans la direction de l'axe principal (H), l'élément ou les éléments de dissipation de chaleur étant formés par lesdits au moins deux ensembles de zones (5a, 5b, 5c ; 6a, 6b, 6c) d'appui, **caractérisé en ce que**
un desdits au moins deux ensembles de zones (6a, 6b, 6c) d'appui est formé en faisant en sorte que les faces d'extrémités d'un ensemble de saillies (10) semblables à des piliers sur une paroi intérieure (3) du boîtier (1) soient parallèles aux faces d'extrémités d'un autre ensemble de saillies (9) semblables à des piliers formant un autre ensemble desdites au moins deux zones (5a, 5b, 5c) d'appui formées sur la paroi intérieure (3), mais décalées dans ladite direction dudit axe principal (H).

2. Dispositif selon la revendication 1,
**caractérisé en ce que**
l'élément ou les éléments de dissipation de chaleur sont formés par une pluralité d'ailettes (11) de refroidissement disposées sur l'extérieur (4) du boîtier (1).

3. Dispositif selon l'une quelconque des revendications précédentes,
**caractérisé en ce que**
un espace creux (12a ; 12b) est formé entre lesdites au moins deux cartes (2a, 2b ; 2b, 2c) à circuits imprimés, et l'espace creux (12a ; 12b) est rempli au moins en partie d'un matériau thermiquement conducteur (13, 14) en tant qu'élément de dissipation de chaleur qui, en particulier, présente au moins la même conductivité thermique que lesdites au moins deux cartes (2a, 2b, 2c) à circuits imprimés et/ou le boîtier (1), le matériau thermiquement conducteur (13, 14) étant en contact mécanique direct avec chacune desdites au moins deux cartes (2a, 2b, 2c) à circuits imprimés.

4. Dispositif selon la revendication 3,
**caractérisé en ce que**
le matériau thermiquement conducteur (13, 14) est en contact mécanique direct avec une paroi intérieure (3) du boîtier (1).

5. Dispositif selon la revendication 4,
**caractérisé en ce que**
le matériau thermiquement conducteur comporte un adhésif et/ou un agent (13) d'étanchéité.

6. Dispositif selon les revendications 3 ou 4, **caractérisé en ce que**
le matériau thermiquement conducteur est formé par un coussin (14) qui, en particulier, s'étend de façon continue entre au moins deux zones marginales (r1, r2) verticalement opposées d'une desdites au moins deux cartes (2b) à circuits imprimés.

7. Dispositif selon l'une quelconque des revendications précédentes, **caractérisé par** une agrafe métallique (15) en tant qu'élément de dissipation de chaleur, qui s'étend essentiellement parallèlement à une (2b) desdites au moins deux cartes (2a, 2b, 2c) à circuits imprimés et encadre ladite carte (2b) à circuit imprimé sur des côtés opposés (r1, r2) de ladite carte (2b) à circuit imprimé de telle façon que ladite carte (2b) à circuit imprimé soit immobilisée dans une position par rapport au boîtier (1), l'agrafe métallique (15) étant particulièrement en contact mécanique direct avec une (2b) des cartes (2a, 2b, 2c) à circuits imprimés et/ou le boîtier (1).

8. Dispositif selon l'une quelconque des revendications précédentes,
**caractérisé en ce que**
une (2c) desdites au moins deux cartes (2a, 2b, 2c) à circuits imprimés comporte un composant (8) monté en surface, en particulier doté d'un élément sollicité par ressort, et le boîtier (1) comporte une plaque (16) de couverture de boîtier, et, la plaque (16) de couverture de boîtier étant fixée au boîtier (1), un contact effectif est établi entre le composant (8) monté en surface et la plaque (16) de couverture de boîtier de telle façon qu'une (2c) desdites au moins deux cartes (2a, 2b, 2c) à circuits imprimés soit maintenue bloquée à force dans une position requise.

9. Dispositif selon la revendication 8,
**caractérisé en ce que**
entre une autre (2a, 2b) desdites au moins deux cartes (2a, 2b, 2c) à circuits imprimés et la carte (2c) à circuit imprimé qui comporte le composant (8) monté en surface, un contact effectif est établi de telle façon que l'autre carte (2a, 2b) à circuit imprimé soit également maintenue bloquée à force dans une position requise affectée à l'autre carte (2a, 2b) à circuit imprimé.

10. Dispositif selon l'une quelconque des revendications précédentes,
**caractérisé en ce que**
l'unité de capture d'imagerie est placée au moins avec des sous-composants sur au moins une des cartes (2a, 2b, 2c) à circuits imprimés.

11. Caméra destinée à un dispositif d'aide à la conduite, dotée d'un dispositif selon l'une quelconque des revendications précédentes.
